# EUROPEAN PATENT SPECIFICATION

(11) **EP 3 064 402 B1**
(45) Date of publication and mention of the grant of the patent: **22.08.2018**
(21) Application number: 16158659.9
(22) Date of filing: 04.03.2016
(51) Int. Cl.: B60R 11/04

(54) **IN-VEHICLE SENSOR MOUNTING STRUCTURE**
MONTAGESTRUKTUR FÜR FAHRZEUGSENSOR
STRUCTURE DE MONTAGE DE CAPTEUR DANS UN VÉHICULE

(30) Priority: 05.03.2015 JP 2015043457
(43) Date of publication of application: 07.09.2016
(73) Proprietor: Toyota Jidosha Kabushiki Kaisha, Aichi-ken Aichi 471-8571 (JP)
(72) Inventor: KAGEYAMA, Shioya, Aichi-ken, Aichi 471-8571 (JP); SHIRAI, Ryoma, Aichi-ken, Aichi 471-8571 (JP); IWAMATSU, Ryo, Aichi-ken, Aichi 471-8571 (JP)
(74) Representative: D Young & Co LLP

(56) References cited:
- EP-A1- 1 389 566
- US-A1- 2012 099 849
- US-A1- 2012 207 461

## Description

### BACKGROUND OF THE INVENTION

### 1. Field of the Invention

The invention relates to an in-vehicle sensor mounting structure.

### 2. Description of Related Art

As a technology concerning a mounting structure for mounting an in-vehicle sensor on a window of a vehicle, a carrier device described in Japanese Patent Application Publication No. 2013-151291 (JP 2013-151291 A) is known. The carrier device described in JP 2013-151291 A includes a carrier plate (bracket) fixed to the vehicle interior side of the window. The carrier plate supports an in-vehicle camera (in-vehicle sensor). Force is applied in a direction away from the window, by a spring portion provided on the carrier plate, to the in-vehicle camera.

With the technology as described above, when the spring portion is to be changed (e.g. replaced with a new one), it may be necessary to change not only the spring portion, but also the bracket on which the spring portion is provided and the window to which the bracket is fixed.
US 2012/207461 A1 discloses an in-vehicle camera which has a case and a lens, and which is attached in a vehicle interior so that the lens is exposed at a top face of the case and the top face is opposed to a windshield. US 2012/207461 A1 does not disclose a first spring portion fixed to an in-vehicle sensor. US 2012/099849 A1 represents the closest prior art and discloses an in-vehicle sensor mounting structure comprising: an in-vehicle sensor; a bracket that holds the in-vehicle sensor, the bracket being fixed to an inner wall of a vehicle interior, the bracket includes an abutment portion that abuts the inner wall of the vehicle interior and extends along the inner wall of the vehicle interior; and a first spring portion fixed to the in-vehicle sensor on a first surface and located between the in-vehicle sensor and the abutment portion, wherein the bracket includes a first restricting portion that restricts movement of the in-vehicle sensor in a direction away from the inner wall of the vehicle interior, and the first spring portion applies force to the in-vehicle sensor in the direction away from the inner wall of the vehicle interior, a wall portion that faces the in-vehicle sensor in a perpendicular direction to the direction away from the inner wall of the vehicle interior, and a second restricting portion that restricts movement of the in-vehicle sensor in a direction away from the wall portion, wherein the wall portion faces the second restricting portion via the in-vehicle sensor and the first spring portion applies force to the in-vehicle sensor in the direction away from the inner wall of the vehicle interior.

### SUMMARY OF THE INVENTION

This invention provides an in-vehicle sensor mounting structure in which a spring portion can be easily changed or replaced with another one.

An in-vehicle sensor mounting structure according to one aspect of the invention includes an in-vehicle sensor, a bracket that holds the in-vehicle sensor, and a first spring portion. The bracket is fixed to an inner wall of a vehicle interior, and includes an abutment portion that abuts the inner wall of the vehicle interior and extends along the inner wall of the vehicle interior. The first spring portion is fixed to the in-vehicle sensor and located between the in-vehicle sensor and the abutment portion. The bracket includes a first restricting portion that restricts movement of the in-vehicle sensor in a direction away from the inner wall of the vehicle interior, and the first spring portion applies force to the in-vehicle sensor in the direction away from the inner wall of the vehicle interior.

In the in-vehicle sensor mounting structure according to the above aspect of the invention, the first spring portion is fixed to the in-vehicle sensor. Thus, the first spring portion can be changed (e.g. replaced with a new one), simply by changing the in-vehicle sensor to which the first spring portion is fixed, thus eliminating a need to change the bracket and the inner wall of the vehicle interior as well as the first spring portion. It is thus possible to easily change the first spring portion.

In the in-vehicle sensor mounting structure according to the above aspect of the invention, the inner wall of the vehicle interior may be a window.

In the in-vehicle sensor mounting structure according to the above aspect of the invention, the bracket includes a wall portion that faces the in-vehicle sensor in a perpendicular direction to the direction away from the inner wall of the vehicle interior, and a second restricting portion that restricts movement of the in-vehicle sensor in a direction away from the wall portion. The in-vehicle sensor mounting structure according to the above aspect of the invention further includes a second spring portion that is fixed to the in-vehicle sensor and located between the in-vehicle sensor and the wall portion. The second spring portion applies force to the in-vehicle sensor in the direction away from the wall portion.

With the arrangement as described above, the second spring portion is fixed to the in-vehicle sensor. Thus, the second spring portion can be changed (e.g. replaced with a new one), for example, simply by changing the in-vehicle sensor to which the second spring portion is fixed, thus making it unnecessary to change the bracket and the inner wall of the vehicle interior (e.g. window) as well as the second spring portion. It is thus possible to easily change the second spring portion.

According to the above aspect of the invention, it is possible to provide the in-vehicle sensor mounting structure in which the spring portion(s) can be easily changed.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1A and FIG. 1B are views showing an in-vehicle sensor mounting structure according to a first embodiment of the invention;
FIG. 2 is a side view showing the configuration of each element of the in-vehicle sensor mounting structure of FIG. 1B;
FIG. 3 is a cross-sectional view showing a modified example of the in-vehicle sensor mounting structure of FIG. 1B;
FIG. 4 is a perspective view showing the configuration of each element of an in-vehicle sensor mounting structure according to a second embodiment of the invention; and
FIG. 5A and FIG. 5B are views showing a first spring portion and a second spring portion of FIG. 4.

### DETAILED DESCRIPTION OF EMBODIMENTS

Some embodiments of the invention will be described in detail with reference to the drawings. In the following description, the same reference numerals are used for the same or corresponding elements, and these elements will not be repeatedly described.

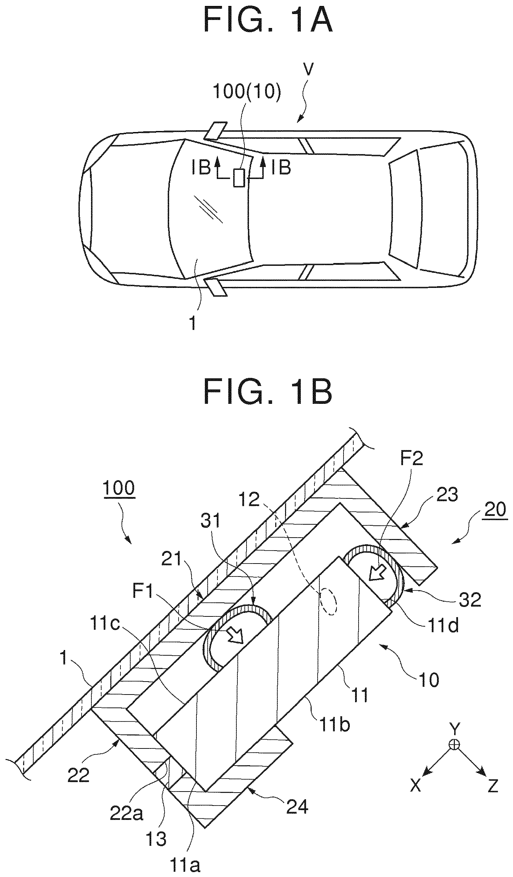

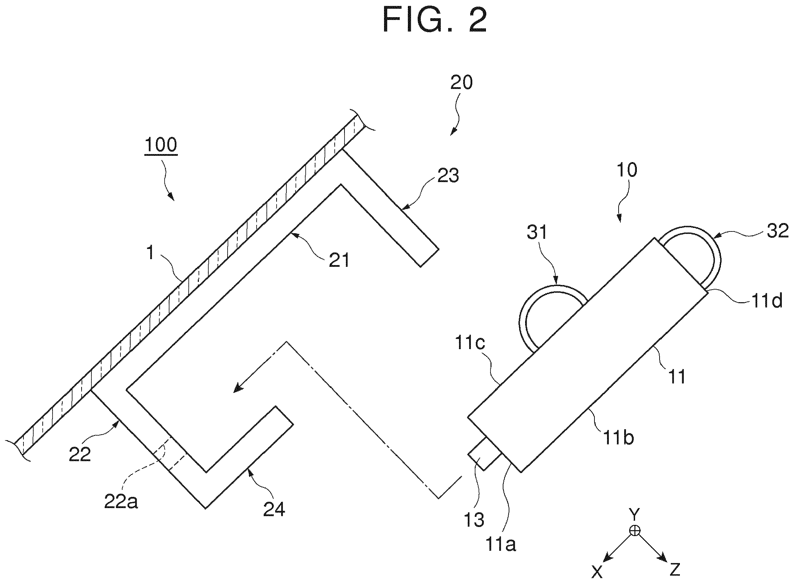

[First Embodiment] FIG. 1A is a schematic plan view showing a vehicle V including an in-vehicle sensor mounting structure 100 according to a first embodiment of the invention. FIG. 1B is a cross-sectional view taken along line IB-IB in FIG. 1A. FIG. 2 is a side view showing the configuration of each element of the in-vehicle sensor mounting structure 100.

As shown in FIG. 1 and FIG. 2, the in-vehicle sensor mounting structure 100 is a mounting structure for mounting an in-vehicle sensor 10 on a window 1 of the vehicle V, such as an automobile. The in-vehicle sensor mounting structure 100 includes a bracket 20 in which the in-vehicle sensor 10 is housed and held in position. The bracket 20 includes at least an abutment portion 21, front wall portion 22, rear wall portion (wall portion) 23, and a vehicle-interior-side support portion 24.

In the following description, a direction away from the window 1 is denoted as Z direction, and a direction that is perpendicular to the Z direction and is parallel to the vehicle width direction of the vehicle V is denoted as Y direction, while a direction that is perpendicular to the Y direction and the Z direction is denoted as X direction. The X direction is a direction away from the rear wall portion 23. The X direction is a direction that is perpendicular to the vehicle width direction and extends along the window 1. The Y direction is a horizontal direction that extends along the window 1. The Z direction is a direction that extends along the thickness direction of the window 1. The Z direction is perpendicular to the window 1. The Z direction is a direction from the vehicle exterior (the outside of the vehicle V) toward the vehicle interior (the interior of the vehicle V).

The in-vehicle sensor 10 is an in-vehicle camera. The in-vehicle camera may be a monocular camera or a stereo camera. The in-vehicle sensor 10 captures an image of the outside of the vehicle through the window 1, and obtains image data. The in-vehicle sensor 10 performs image processing on the obtained image data, and outputs the result of the processing. The in-vehicle sensor 10 may be used in a prevention safety system, for example. The in-vehicle sensor 10 may be used in a white line recognition system for recognizing white lines on roads, or an obstacle recognition system for recognizing an obstacle around the vehicle, for example.

In this embodiment, the window 1 is a front window (which is also called "windshield"), and the in-vehicle sensor 10 captures an image of the front of the vehicle V. The window 1 may be a side window. In this case, the in-vehicle sensor 10 captures an image of one side of the vehicle V. The window 1 may be a rear window. In this case, the in-vehicle sensor 10 captures an image of the rear of the vehicle V.

The in-vehicle sensor 10 has a sensor housing 11, and an optical system 12, such as a lens. In the in-vehicle sensor 10, light from the vehicle exterior passes through the window 1, and is incident on an image pickup device via the optical system 12. For example, CCD (Charge Coupled Device) or CMOS (Complementary Metal Oxide Semiconductor) is used as the image pickup device. In the case where a black ceramic line is attached to the window 1, a cutout (a portion to which the ceramic line is not attached) is provided in a range of the ceramic line within the angle of view of the in-vehicle sensor 10. The sensor housing 11 is provided with a protrusion 13 that protrudes toward the front side of the vehicle (which will be simply referred to as "front side") in a direction along the X direction. The protrusion 13 engages with (or is fitted in) the bracket 20. The protrusion 13 is provided on a front side face 11a of the sensor housing 11.

The bracket 20 is fixed to the vehicle interior side (facing in the Z direction) of the window 1. The bracket 20 is adhesively fixed to a surface of the window 1 facing the vehicle interior. The method of fixing the bracket 20 to the window 1 is not limited to adhesion, but any known method may be employed.

The abutment portion 21 abuts the window 1, and extends along the window 1. The abutment portion 21 has a plate-like shape. The abutment portion 21 is bonded and fixed to the surface of the window 1 facing the vehicle interior. A surface of the abutment portion 21 facing the vehicle interior abuts on and contacts with the in-vehicle sensor 10. An opening (not shown) that extends through the front surface and rear surface of the abutment portion 21 is formed in at least a range of the abutment portion 21 within the angle of view of the in-vehicle sensor 10.

The front wall portion 22 is provided at a front end portion of the abutment portion 21. The front wall portion 22 is provided perpendicularly to the abutment portion 21. The front wall portion 22 protrudes in the Z direction away from the abutment portion 21. The front wall portion 22 extends along the Y direction. The front wall portion 22 abuts the in-vehicle sensor 10 in the X direction. A surface of the front wall portion 22 facing the vehicle rear side (which will be simply referred to as "rear side") in a direction along the X direction abuts on and contacts with the in-vehicle sensor 10. The front wall portion 22 supports the in-vehicle sensor 10 in the X direction. The front wall portion 22 constitutes a second restricting portion that restricts movement of the in-vehicle sensor 10 in the X direction. In other words, the front wall portion 22 functions as a stopper of the in-vehicle sensor 10 in the X direction.

The front wall portion 22 is provided with a through-hole 22a into which the protrusion 13 of the in-vehicle sensor 10 is inserted. The through-hole 22a has a cross-sectional shape corresponding to that of the protrusion 13 of the in-vehicle sensor 10. The through-hole 22a is engaged with the protrusion 13 of the in-vehicle sensor 10. In this embodiment, the protrusion 13 of the in-vehicle sensor 10 is press-fitted in the through-hole 22a. In this manner, the in-vehicle sensor 10 is positioned relative to the bracket 20, in a direction other than the protruding direction (X direction) of the protrusion 13. An inner wall of the through-hole 22a supports the in-vehicle sensor 10 via the protrusion 13 in the Z direction. The through-hole 22a constitutes a first restricting portion that restricts movement of the in-vehicle sensor 10 in the Z direction. In other words, the through-hole 22a functions as a stopper of the in-vehicle sensor 10 in the Z direction.

The rear wall portion 23 is provided at a rear end portion of the abutment portion 21. The rear wall portion 23 is provided perpendicularly to the abutment portion 21. The rear wall portion 23 protrudes in the Z direction away from the abutment portion 21. The rear wall portion 23 extends along the Y direction. The rear wall portion 23 faces the in-vehicle sensor 10 in the X direction. Also, the rear wall portion 23 faces the front wall portion 22 via the in-vehicle sensor 10.

The vehicle-interior-side support portion 24 is provided at an end portion (distal end portion) of the front wall portion 22 as viewed in the Z direction. The vehicle-interior-side support portion 24 is provided perpendicularly to the front wall portion 22. The vehicle-interior-side support portion 24 has a plate-like shape parallel to the abutment portion 21. The vehicle-interior-side support portion 24 faces to the abutment portion 21 via the in-vehicle sensor 10. The vehicle-interior-side support portion 24 abuts on and contacts with a side surface 11b of the in-vehicle sensor 10 facing the vehicle interior. The vehicle-interior-side support portion 24 supports the in-vehicle sensor 10 in the Z direction. The vehicle-interior-side support portion 24 constitutes a first restricting portion that restricts movement of the in-vehicle sensor 10 in the Z direction. In other words, the vehicle-interior-side support portion 24 functions as a stopper of the in-vehicle sensor 10 in the Z direction.

The in-vehicle sensor mounting structure 100 includes a first spring portion 31 and a second spring portion 32. The first spring portion 31 is located between the in-vehicle sensor 10 and the abutment portion 21. The first spring portion 31 is fixed to the in-vehicle sensor 10. The first spring portion 31 is provided on a surface of the in-vehicle sensor 10 facing the vehicle exterior (in a direction toward the window 1, or a direction opposite to the Z direction), such that the first spring portion 31 is elastically deformable in the Z direction. The first spring portion 31 is fixed to a side surface 11c of the sensor housing 11 facing the vehicle exterior, by means of rivets, for example. The first spring portion 31 is located on a flat surface portion of the side surface 11c of the sensor housing 11.

The first spring portion 31 is sandwiched between the in-vehicle sensor 10 and the abutment portion 21, and is elastically deformed to be crushed in the Z direction. The first spring portion 31 applies Z direction force F1 as a restoring force (elastic force) commensurate with the elastic deformation, to the in-vehicle sensor 10. In the illustrated embodiment, the first spring portion 31 applies force F1 in a direction that intersects with the window 1, F1 is a pressing force for pressing the in-vehicle sensor 10 toward the vehicle interior, to the side surface 11c of the sensor housing 11 facing the vehicle exterior. The first spring portion 31 applies the Z direction force F1 to the in-vehicle sensor 10, so as to press the in-vehicle sensor 10 against the vehicle-interior-side support portion 24. The first spring portion 31 applies force directed from the vehicle interior to the vehicle exterior (in a direction toward the window 1), as reaction force of the force F1 applied to the in-vehicle sensor 10, to the abutment portion 21.

The second spring portion 32 is located between the in-vehicle sensor 10 and the rear wall portion 23. The second spring portion 32 is fixed to the in-vehicle sensor 10. The second spring portion 32 is provided on a rear surface of the in-vehicle sensor 10 such that it is elastically deformable in the X direction. The second spring portion 32 is fixed to a rear side surface 11d of the sensor housing 11 by means of rivets, for example. The second spring portion 32 is located on a flat surface portion of the side surface 11d of the sensor housing 11.

The second spring portion 32 is sandwiched between the in-vehicle sensor 10 and the rear wall portion 23, and is elastically deformed to be crushed in the X direction. The second spring portion 32 applies X direction force F2 as a restoring force (elastic force) commensurate with the elastic deformation, to the in-vehicle sensor 10. In the illustrated embodiment, the second spring portion 32 applies force F2 as a pressing force for pressing the in-vehicle sensor 10 in a direction away from the rear wall portion 23 toward the front wall portion 22, to the side surface 11d of the sensor housing 11. The second spring portion 32 applies the X direction force F2 to the in-vehicle sensor 10, so as to press the in-vehicle sensor 10 against the front wall portion 22. The second spring portion 32 applies force in a direction toward the rear wall portion 23 (force directed from the front wall portion 22 to the rear wall portion 23, force in a direction opposite to the X direction), as a reaction force of the force F2 applied to the in-vehicle sensor 10, to the rear wall portion 23.

Plate springs made of resin are used as the first spring portion 31 and the second spring portion 32. For example, the first spring portion 31 and the second spring portion 32 are formed of a material having a lower thermal conductivity than that of the bracket 20. With this arrangement, heat transferred from the window 1 to the in-vehicle sensor 10 via the bracket 20 is reduced.

The material and shape of the first spring portion 31 and the second spring portion 32 are not particularly limited. The first spring portion 31 and the second spring portion 32 may be made of metal, for example. The first spring portion 31 and the second spring portion 32 may be coil springs, cantilever springs, disc springs, or laminated leaf-springs, for example. Each of the first spring portion 31 and the second spring portion 32 is a mechanical structure that stores elastic energy, utilizing the restoring force of an elastic body. As the first spring portion 31 and the second spring portion 32, various spring portions may be employed, provided that they can apply force F1 and force F2 when they are elastically deformed.

As shown in FIG. 2, when the in-vehicle sensor 10 is mounted on the window 1, using the in-vehicle sensor mounting structure 100, the abutment portion 21 of the bracket 20 is initially bonded and fixed to the vehicle interior side of the window 1. Then, the in-vehicle sensor 10 is inserted into the bracket 20 while the first spring portion 31 and the second spring portion 32 are elastically deformed. The side surface 11b of the in-vehicle sensor 10 is brought into abutting contact with the vehicle-interior-side support portion 24 of the bracket 20. The protrusion 13 of the in-vehicle sensor 10 is inserted into the through-hole 22a of the bracket 20, so that the side surface 11a of the in-vehicle sensor 10 is brought into abutting contact with the front wall portion 22 of the bracket 20. As a result, the in-vehicle sensor 10 is housed in the bracket 20 fixed to the window 1, and the in-vehicle sensor 10 is held on the abutment portion 21, so that the in-vehicle sensor 10 is mounted on the window 1.

At this time, the Z direction force F1 (see FIG. 1B) is applied by the first spring portion 31, to the in-vehicle sensor 10, so that the in-vehicle sensor 10 is pressed against the vehicle-interior-side support portion 24. The X direction force F2 (see FIG. 1B) is applied by the second spring portion 32, to the in-vehicle sensor 10, so that the in-vehicle sensor 10 is pressed against the front wall portion 22. As a result, the in-vehicle sensor 10 is securely held or supported by the bracket 20, so as not to move relative to the bracket 20 due to vibration, etc. during running of the vehicle V. Also, with the protrusion 13 fitted in the through-hole 22a, movement of the in-vehicle sensor 10 relative to the bracket 20 is restricted, and the in-vehicle sensor 10 is positioned.

In the in-vehicle sensor mounting structure 100 as described above, the first spring portion 31 is fixed to the in-vehicle sensor 10. Thus, as compared with the case where the first spring portion 31 is fixed to the bracket 20, the first spring portion 31 can be changed (e.g. replaced with a new one) in the event of deterioration or breakage (fracture) of the first spring portion 31, for example, simply by changing the in-vehicle sensor 10 to which the first spring portion 31 is fixed. This arrangement makes it unnecessary to change the bracket 20 and the window 1 together, specifically by replacing an assembly including the bracket 20, window 1 and the first spring portion 31 with another assembly. It is thus possible to easily change the first spring portion 31. Consequently, the maintainability and serviceability of the in-vehicle sensor mounting structure 100 can be prevented from being deteriorated.

In the in-vehicle sensor mounting structure 100, the second spring portion 32 is also fixed to the in-vehicle sensor 10. Thus, the second spring portion 32 can be changed, for example, simply by changing only the in-vehicle sensor 10 to which the second spring portion 32 is fixed. This arrangement makes it unnecessary to change the bracket 20 and the window 1 together, specifically by replacing an assembly including the bracket 20, window 1, and the second spring portion 32, with another assembly. It is thus possible to easily change the second spring portion 32. Consequently, the maintainability and serviceability of the in-vehicle sensor mounting structure 100 can be further prevented from being deteriorated.

In addition, when at least one of the first spring portion 31 and the second spring portion 32 is to be changed, the bracket 20 need not be detached from the window 1, and thus the bracket 20 need not be fixed again to the window 1. Therefore, there is no possibility that the mounting position of the bracket 20 on the window 1 (the position of the bracket 20 fixed on the window 1) is shifted or varied during the changing or replacement. Thus, the detection accuracy of the in-vehicle sensor 10 is less likely to be influenced by the changing or replacement.

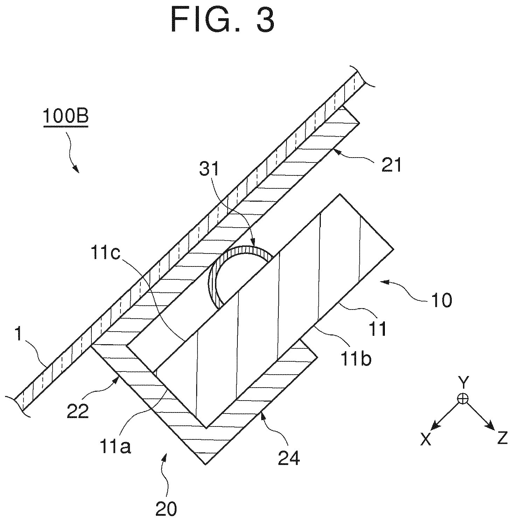

FIG. 3 is a cross-sectional view showing an in-vehicle sensor mounting structure 100B according to a modified example. FIG. 3 shows a cross-sectional surface equivalent to that shown in FIG. 1B. As shown in FIG. 3, the in-vehicle sensor mounting structure 100B does not include the second spring portion 32 (see FIG. 1B). In the in-vehicle sensor mounting structure 100B, the bracket 20 does not have the rear wall portion 23. The in-vehicle sensor 10 is not provided with the protrusion 13, and the through-hole 22a (see FIG. 1B) is not formed in the front wall portion 22 of the bracket 20.

[Second Embodiment] Next, an in-vehicle sensor mounting structure according to a second embodiment of the invention will be described. In the following, description that overlaps that of the first embodiment may be omitted.

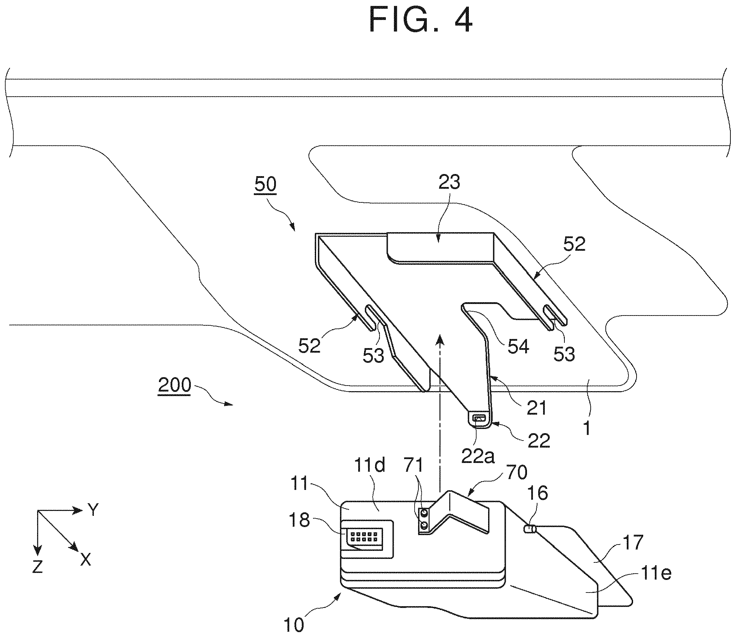

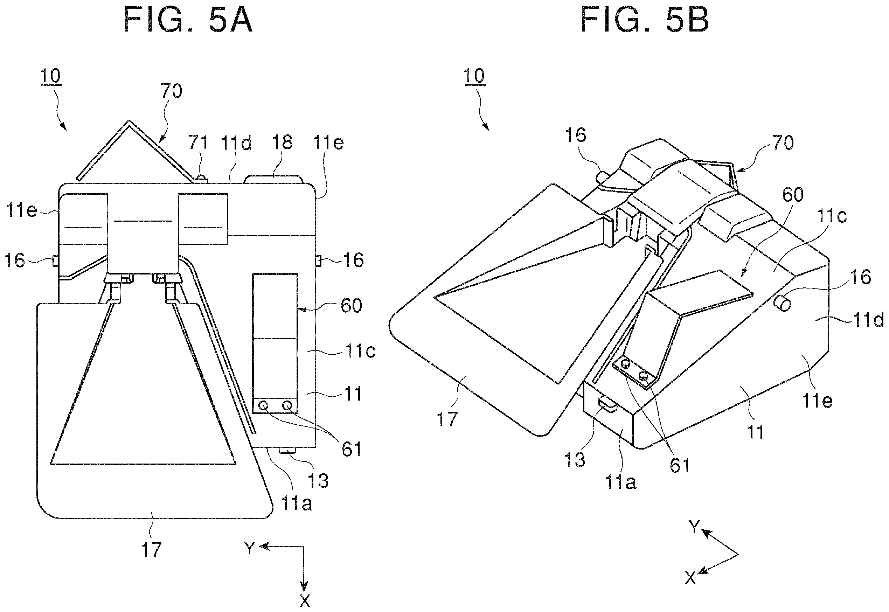

FIG. 4 is a perspective view showing the configuration of each element of the in-vehicle sensor mounting structure 200 according to the second embodiment. FIG. 5A is a plan view showing an in-vehicle sensor 10 to which a first spring portion 60 and a second spring portion 70 are fixed. FIG. 5B is a perspective view showing the in-vehicle sensor 10 of FIG. 5A. The perspective view of FIG. 4 shows the rear side of the in-vehicle sensor mounting structure 200 when it is looked at from the vehicle interior.

As shown in FIG. 4, the in-vehicle sensor mounting structure 200 is different from that of the first embodiment in that the mounting structure 200 includes a bracket 50 in place of the bracket 20. As shown in FIG. 4 and FIGS. 5A and 5B, the in-vehicle sensor mounting structure 200 is different from that of the first embodiment in that the mounting structure 200 includes the first spring portion 60 and the second spring portion 70, in place of the first spring portion 31 and the second spring portion 32.

In the in-vehicle sensor 10 of this embodiment, the sensor housing 11 is formed with two or more protrusions 16. The protrusions 16 are provided on the opposite side surfaces 11e of the sensor housing 11 to each other in the vehicle width direction. The protrusions 16 protrude along (the) Y direction. The protrusions 16 engage with the bracket 50. A protrusion 13 that protrudes from a front side surface 11a of the sensor housing 11 has an oval cross-sectional surface whose longitudinal direction is the vehicle width direction.

The in-vehicle sensor 10 is housed in the bracket 50. The bracket 50 is formed of metal, for example. The bracket 50 includes an abutment portion 21, front wall portion 22, rear wall portion 23, and side wall portions 52. A through-hole 22a provided in the front wall portion 22 is in the shape of an oval hole that extends in the vehicle width direction, as a shape corresponding to the cross-sectional shape of the protrusion 13 of the in-vehicle sensor 10. The abutment portion 21 is shaped such that at least a range within the angle of view of the in-vehicle sensor 10 is cut out. Namely, an opening 54 is formed through a portion of the abutment portion 21 corresponding to a hood 17 of the in-vehicle sensor 10.

The side wall portions 52 of the bracket 50 are respectively provided at opposite end portions of the abutment portion 21 as viewed in the vehicle width direction, so as to be facing each other. The side wall portions 52 are provided perpendicularly to the abutment portion 21. The side wall portions 52 are also perpendicular to the front wall portion 22 and the rear wall portion 23. The spacing between the pair of side wall portions 52 facing each other in the vehicle width direction corresponds to the width of the in-vehicle sensor 10 as measured in the vehicle width direction. The in-vehicle sensor 10 is located and fitted between the pair of side wall portions 52. The pair of side wall portions 52 constitute a third restricting portion that restricts movement of the in-vehicle sensor 10 in the Y direction. In other words, the side wall portions 52 function as a stopper of the in-vehicle sensor 10 in the Y direction.

Slits 53 that extend in the X direction are formed in the side wall portions 52. The slits 53 are open to the vehicle interior in the X direction. The slits 53 permit the protrusions 16 of the in-vehicle sensor 10 to pass from the front side to the rear side, to be engaged with the protrusions 16. Each of the slits 53 has a width that permits the protrusion 16 to pass through the slit 53. The inner walls of the slits 53 support the in-vehicle sensor 10 via the protrusions 16. The slits 53 constitute a first restricting portion that restricts movement of the in-vehicle sensor 10 in the Z direction. In other words, the slits 53 function as stoppers of the in-vehicle sensor 10 in the Z direction.

The first spring portion 60 is a plate spring in the form of a flexed plate. The first spring portion 60 extends in the X direction while being flexed so as to project outward. The first spring portion 60 is fixed to a surface of the in-vehicle sensor 10 facing the vehicle exterior. A proximal end portion of the first spring portion 60 is fixed to a side surface 11c of the sensor housing 11 facing the vehicle exterior, by means of rivets 61. The first spring portion 60 shown in FIGS. 5A and 5B is located adjacent to the hood 17 in the Y direction. The first spring portion 60 is located on a flat surface portion of the side surface 11c of the sensor housing 11.

The first spring portion 60 is located between the in-vehicle sensor 10 and the abutment portion 21. The first spring portion 60 is elastically deformable in the Z direction. The first spring portion 60 applies a Z direction force, as its restoring force, to the side surface 11c of the in-vehicle sensor 10. The in-vehicle sensor 10 is supported by the through-hole 22a via the protrusion 13, and is also supported by the slits 53 via the protrusions 16; therefore, the first spring portion 60 presses the in-vehicle sensor 10 against the inner walls of the through-hole 22a and the slits 53. The first spring portion 60 applies force in a direction toward the window 1, as a reaction force of the above-indicated force applied to the in-vehicle sensor 10, to the abutment portion 21.

The second spring portion 70 is a plate spring in the form of a flexed plate. The second spring portion 70 extends in the Y direction while being flexed so as to project outwards. The second spring portion 70 is fixed to a rear surface of the in-vehicle sensor 10. A proximal end portion of the second spring portion 70 is fixed to a rear side surface 11d of the sensor housing 11, by means of rivets 71. The second spring portion 70 shown in FIG. 4 and FIG. 5A is located adjacent to a connector 18 as viewed in the Y direction. The second spring portion 70 is located on a flat surface portion of the side surface 11d of the sensor housing 11.

The second spring portion 70 is located between the in-vehicle sensor 10 and the rear wall portion 23. The second spring portion 70 is elastically deformable in the X direction. The second spring portion 70 applies an X direction force as its restoring force to the side surface 11d of the in-vehicle sensor 10. The second spring portion 70 presses the in-vehicle sensor 10 against the front wall portion 22 of the bracket 50. The second spring portion 70 applies force in a direction toward the rear wall portion 23, as a reaction force of the above-indicated force applied to the in-vehicle sensor 10, to the rear wall portion 23.

In the in-vehicle sensor mounting structure 200 as described above, the first spring portion 60 is fixed to the in-vehicle sensor 10. Thus, the first spring portion 60 can be changed (e.g. replaced with a new one), simply by changing only the in-vehicle sensor 10 to which the first spring portion 60 is fixed. This arrangement makes it unnecessary to change the bracket 50 and the window 1 together. It is thus possible to easily change the first spring portion 60. Consequently, the maintainability and serviceability of the in-vehicle sensor mounting structure 200 can be prevented from being deteriorated.

In the in-vehicle sensor mounting structure 200, since the second spring portion 70 is fixed to the in-vehicle sensor 10, the second spring portion 70 can be changed (e.g. replaced with a new one), for example, simply by changing only the in-vehicle sensor 10 to which the second spring portion 70 is fixed. This makes it unnecessary to replace the bracket 50 and the window 1 together. Thus, the second spring portion 70 can be easily changed. Consequently, the maintainability and serviceability of the in-vehicle sensor mounting structure 200 can be further prevented from being deteriorated.

In addition, when at least one of the first spring portion 60 and the second spring portion 70 is changed, the bracket 50 need not be detached from the window 1, and thus the bracket 50 need not be fixed again to the window 1. Therefore, there is no possibility that the mounting position of the bracket 50 on the window 1 is shifted or varied during the changing or replacement. Thus, the detection accuracy of the in-vehicle sensor 10 is less likely to be influenced by the changing or replacement.

While some embodiments of the invention have been described, this invention is not limited to the above-described embodiments, but may be embodied in various forms.

In the above-described embodiment, the first spring portion 60 is fixed to the in-vehicle sensor 10 with the rivets 61, and the second spring portion 70 is fixed to the in-vehicle sensor 10 with the rivets 71. However, the method of fixing the spring portion to the in-vehicle sensor is not limited to a particular method, the spring portion may be fixed to the in-vehicle sensor by a known fixing method.

In the above-described embodiments, the in-vehicle sensor 10 is not limited to the in-vehicle camera, but may be a radar, or a LIDAR (Laser Imaging Detection and Ranging). In the above-described embodiments, the position of the in-vehicle sensor 10 at which the first spring portion 31, 60 is fixed is not particularly limited provided that the first spring portion 31, 60 is located between the in-vehicle sensor 10 and the abutment portion 21. The first spring portion 31, 60 is only required to be fixed to the in-vehicle sensor 10.

In the above-described embodiments, the position of the in-vehicle sensor at which the second spring portion 32, 70 is fixed is not particularly limited provided that the second spring portion 32, 70 is located between the rear wall portion 23 and the in-vehicle sensor 10. The second spring portion 32, 70 is only required to be fixed to the in-vehicle sensor 10. In the above-described embodiments, the statement that the first spring portion 31, 60 is fixed to the in-vehicle sensor 10 includes the case where the first spring portion 31, 60 is fixed to the in-vehicle sensor 10 via another member. In the above-described embodiments, the statement that the second spring portion 32, 70 is fixed to the in-vehicle sensor 10 includes the case where the second spring portion 32, 70 is fixed to the in-vehicle sensor 10 via another member.

In the above-described embodiments, the second spring portion 32, 70 may be located between the in-vehicle sensor 10 and the front wall portion 22. In this case, the rear wall portion 23 constitutes the second restricting portion. In the above-described embodiment, the second spring portion 70 may be located between the in-vehicle sensor 10 and the side wall portion 52. In this case, the side wall portion 52 that is facing the above-indicated side wall portion 52 via the in-vehicle sensor 10 constitutes the second restricting portion.

In the above-described embodiments, the in-vehicle sensor mounting structure 100, 200 may be mounted on a wall of the vehicle interior other than the window 1.

## Claims

1. An in-vehicle sensor mounting structure (100) comprising:
an in-vehicle sensor (10);
a bracket (20) that holds the in-vehicle sensor, the bracket being fixed to an inner wall (1) of a vehicle interior, the bracket includes an abutment portion (21) that abuts the inner wall of the vehicle interior and extends along the inner wall of the vehicle interior; and
a first spring portion (31) fixed to the in-vehicle sensor on a first surface and located between the in-vehicle sensor and the abutment portion, wherein
the bracket includes a first restricting portion (24) that restricts movement of the in-vehicle sensor in a direction away from the inner wall (1) of the vehicle interior, a wall portion (23) that faces the in-vehicle sensor in a perpendicular direction to the direction away from the inner wall of the vehicle interior, and a second restricting portion (22) that restricts movement of the in-vehicle sensor in a direction away from the wall portion (23), wherein the wall portion (23) faces the second restricting portion (22) via the in-vehicle sensor and
the first spring portion (31) applies force to the in-vehicle sensor in the direction away from the inner wall (1) of the vehicle interior,
the in-vehicle sensor mounting structure further comprising a second spring portion (32) fixed to the in-vehicle sensor on a second surface and located between the in-vehicle sensor and the wall portion (23), and
the second spring portion applies force to the in-vehicle sensor in the direction away from the wall portion (23).

2. The in-vehicle sensor mounting structure according to claim 1, wherein the inner wall of the vehicle interior comprises a window (1).

## Patentansprüche

1. Montagestruktur (100) für Fahrzeugsensor, umfassend:
einen Fahrzeugsensor (10);
eine Halterung (20), die den Fahrzeugsensor hält, wobei die Halterung an einer Innenwand (1) eines Fahrzeuginnenraums fixiert ist, wobei die Halterung einen Anlageteil (21) enthält, der an der Innenwand des Fahrzeuginnenraums anliegt und sich entlang der Innenwand des Fahrzeuginnenraums erstreckt; und
einen ersten Federteil (31), der an dem Fahrzeugsensor auf einer ersten Fläche fixiert und zwischen dem Fahrzeugsensor und dem Anlageteil positioniert ist, wobei
die Halterung einen ersten Beschränkungsteil (24), der eine Bewegung des Fahrzeugsensors in einer von der Innenwand (1) des Fahrzeuginnenraums weg verlaufenden Richtung beschränkt, einen Wandteil (23), der dem Fahrzeugsensor in einer zu der von der Innenwand des Fahrzeuginnenraums weg verlaufenden Richtung senkrechten Richtung zugekehrt ist, und einen zweiten Beschränkungsteil (22), der eine Bewegung des Fahrzeugsensors in einer von dem Wandteil (23) weg verlaufenden Richtung beschränkt, enthält,
wobei der Wandteil (23) dem zweiten Beschränkungsteil (22) über den Fahrzeugsensor zugekehrt ist und
der erste Federteil (31) in der von der Innenwand (1) des Fahrzeuginnenraums weg verlaufenden Richtung eine Kraft an den Fahrzeugsensor anlegt,
wobei die Montagestruktur für den Fahrzeugsensor ferner einen zweiten Federteil (32) umfasst, der an dem Fahrzeugsensor auf einer zweiten Fläche fixiert und zwischen dem Fahrzeugsensor und dem Wandteil (23) positioniert ist und der zweite Federteil in der von dem Wandteil (23) weg verlaufenden Richtung eine Kraft an den Fahrzeugsensor anlegt.

2. Montagestruktur für Fahrzeugsensor nach Anspruch 1 wobei die Innenwand des Fahrzeuginnenraums ein Fenster (1) umfasst.

## Revendications

1. Structure d'installation de capteur embarqué (100) comprenant :
un capteur embarqué (10) ;
un support (20) qui maintient le capteur embarqué, le support étant fixé à une paroi intérieure (1) d'un habitacle de véhicule, le support comprenant une partie d'appui (21) qui est en appui sur la paroi intérieure de l'habitacle de véhicule et s'étend le long de la paroi intérieure de l'habitacle de véhicule ; et
une première partie élastique (31) fixée au capteur embarqué sur une première surface et située entre le capteur embarqué et la partie d'appui,
dans laquelle le support comprend une première partie de limitation (24) qui limite un déplacement du capteur embarqué dans une direction s'éloignant de la paroi intérieure (1) de l'habitacle de véhicule, une partie de paroi (23) qui fait face au capteur embarqué dans une direction perpendiculaire à la direction s'éloignant de la paroi intérieure de l'habitacle de véhicule, et une seconde partie de limitation (22) qui limite un déplacement du capteur embarqué dans une direction s'éloignant de la partie de paroi (23),
dans laquelle la partie de paroi (23) fait face à la seconde partie de limitation (22) avec le capteur embarqué intercalé entre elles et la première partie élastique (31) applique une force au capteur embarqué dans la direction s'éloignant de la paroi intérieure (1) de l'habitacle de véhicule,
la structure d'installation de capteur embarqué comprenant en outre une seconde partie élastique (32) fixée au capteur embarqué sur une seconde surface et située entre le capteur embarqué et la partie de paroi (23), et la seconde partie élastique applique une force au capteur embarqué dans la direction s'éloignant de la partie de paroi (23).

2. Structure d'installation de capteur embarqué selon la revendication 1, dans laquelle la paroi intérieure de l'habitacle de véhicule comprend une vitre (1).
